**Europäisches Patentamt**

**European Patent Office**

**Office européen des brevets**

(19)

(11) Publication number : **0 573 162 A1**

(12) # EUROPEAN PATENT APPLICATION

(21) Application number : **93303765.7**

(22) Date of filing : **17.05.93**

(51) Int. Cl.⁵ : **B60B 1/00, B60B 21/10**

(30) Priority : **03.06.92 JP 142893/92**

(43) Date of publication of application :
**08.12.93 Bulletin 93/49**

(84) Designated Contracting States :
**DE FR GB**

(71) Applicant : **BRIDGESTONE CORPORATION**
**10-1, Kyobashi 1-Chome Chuo-Ku**
**Tokyo 104 (JP)**

(72) Inventor : **Hibino, Ryohei**
**707, 24-5, Odai 1-chome**
**Adachi-Ku, Tokyo (JP)**

(74) Representative : **Whalley, Kevin et al**
**MARKS & CLERK 57/60 Lincoln's Inn Fields**
**London WC2A 3LS (GB)**

(54) **Wheels for pneumatic tires.**

(57)    A wheel for a pneumatic rubber tire comprises a bead seat (1), a flange (2), a bead seat radius (3) connecting the bead seat to the flange and a well (5), in which the bead seat pair has an oppositely taper relationship of extending toward the bead seat radius at a downwardly inclined gradient. When a tire is mounted onto such a wheel, the occurrence of radial run-out is reduced and also the radial force variation is mitigated to overcome vibration of a vehicle.

## FIG. 1

EP 0 573 162 A1

This invention relates to a wheel for a pneumatic rubber tire having an improved fitness of a rim to the tire.

The pneumatic rubber tire is assembled onto a rim adaptable for a tire size of this tire at a pair of bead portions thereof and inflated under a given air pressure to use as a wheel-tire assembly. Such an assembling operation is frequently called as a rim-assembling. If this operation is unskillful, radial run-out of the tire is caused to obstruct the development of performances inherent to the tire.

In general, the rim in this type of the wheel has basically a shape according to various standards (JIS, JATMA, ETRTO, TRA and the like) and comprises a pair of bead seats each extending from each of two intersect points of two parallel lines perpendicular to a mother line of a cylinder having a diameter equal to a specified rim diameter (which is generally called as a bead base line or a rim diameter line) and separated from each other at a distance equal to a specified rim width toward a center of the rim width at a downwardly inclined gradient with respect to the mother line, a pair of flanges each standing up from each intersect point along the parallel line and being curved in an opposite direction, a bead seat radius connecting the bead seat to the flange in form of a concave arc substantially matched with a radially sectional contour of a bead heel in the pneumatic rubber tire, and a well (or center drop) having a diameter smaller than the specified rim diameter and connecting the bead seats to each other through or without a hump located at the inside of the bead seat and protruding slightly outward from the bead seat. It is custum to mount the pneumatic rubber tire onto the wheel through taper fitting for assembling a pair of the bead portions into respective bead seats of the rim under an influence of an internal air pressure. In this connection, there are proposed various attempts for maintaining air tightness by forming an effective interference at a toe of the bead portion in the tire, while the case of drastically reforming the rim is few.

The taper fitting according to the conventional technique is widely used even in the joining of mechanical elements in addition to the rim assembling because it is generally convenient to easily and surely establish a concentric relationship between the members to be fitted. Since the pneumatic rubber tire is fundamentally made from an elastic material easily causing deformation, if it is intended to increase the interference of the bead toe for enhancing the air tightness against the internal air pressure, the fitness at the bead heel becomes insufficient to obstruct the above merit through the taper fitting.

That is, radial run-out of the tire is caused to induce longitudinal vibration of the tire-wheel assembly, which comes into problem as vibration of a vehicle.

It is, therefore, an object of the invention to improve the fitness of the bead heel in the pneumatic rubber tire together with the air tightness dependent upon the function of the bead toe. It is another object of the invention to properly ensure a rim-assembled state of the bead portion even under external forces of various directions acting to the tread of the tire.

According to the invention, there is the provision of a wheel for a pneumatic rubber tire comprising each pair of bead seats and flanges for receiving a pair of bead portions in the tire through fitting and a bead seat radius connecting the bead seat to the flange and having a sectionally concave arc corresponding to a radially sectional contour of a bead heel in the bead portion of the tire, in which said pair of bead seats have an oppositely taper relationship of extending toward said bead seat radius at a downwardly inclined gradient, whereby a stable seating state of the bead heel is induced and held and also an interference of a toe in said bead portion is increased.

In preferred embodiments of the invention, the bead seat radius includes a cylindrical surface portion of a short length adjoining to a downwardly extended end of the bead seat, and an inclination angle of the bead seat with respect to a bead base line of the bead portion is within a range of 4-14°, and the bead seat is a rotating surface of an outwardly concave curve having a radius of curvature of 20-1000 mm, and the flange has an escape surface inclined outward with respect to a plane inclusive of a point defining a specified rim width on the bead base line perpendicular to a center axis of the wheel, and an inclination angle of the escape surface with respect to the above plane is not more than 10°, and a minimum diameter of the rim at the bead seat radius is D-2.6 mm (tolerance: ±0.98 mm) to a specified rim diameter D, and a maximum diameter of the bead seat is D+0.4 mm (tolerance: +0.6 mm, -0.2 mm).

The invention will be described with reference to the accompanying drawings, wherein:

Fig. 1 is a diagrammatically sectional view of a rim according to the invention;

Fig. 2 is a diagrammatically sectional view of the conventional rim;

Fig. 3 is a diagrammatically partial section view of a pneumatic rubber tire;

Fig. 4 is a schematic view of a first embodiment of the rim according to the invention in contrast with the conventional rim; and

Fig. 5 is a schematic view of a second embodiment of the rim according to the invention in contrast with the conventional rim.

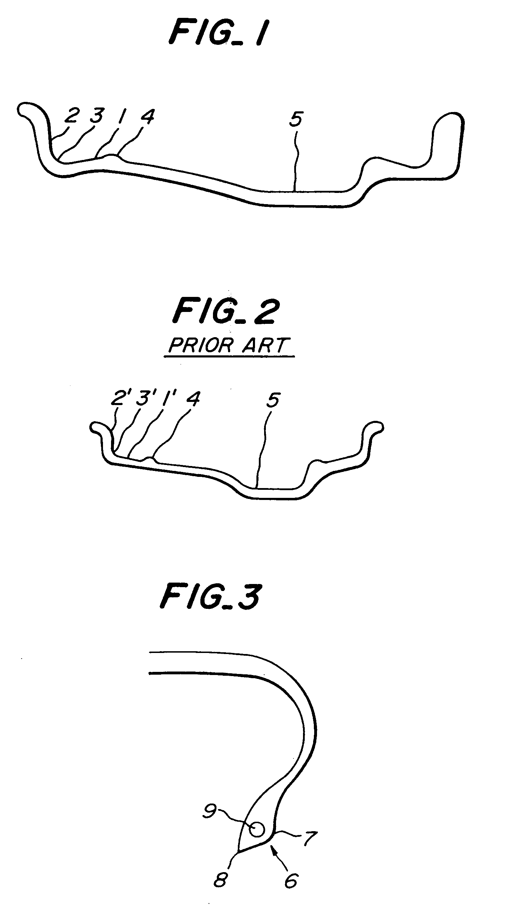

In Fig. 1 is sectionally shown an embodiment of the rim for pneumatic rubber tire according to the invention, and an embodiment of the conventional rim is sectionally shown in Fig. 2. Numeral 1 is a bead seat, numeral 2 a flange, numeral 3 a bead seat radius, numeral 4 a hump arranged inside the bead seat, if necessary, and numeral 5 a well. Moreover, numerals 1', 2' and 3' in the conventional rim correspond to respective numerals of the rim according to the invention.

Fig. 3 sectionally shows a main part of a pneumatic rubber tire wherein numeral 6 a bead portion, numeral 7 a heel of the bead portion, numeral 8 a toe of the bead portion and numeral 9 a bead core.

As shown in Figs. 1 and 2, the rim comprises each pair of bead seats 1 (or 1') and flanges 2 (or 2') for receiving a pair of bead portions 6 in the tire and the bead seat radius 3 (or 3') connecting the bead seat to the flange and having a sectionally concave arc corresponding to a radially sectional contour of the heel 7 in the bead portion 6.

According to the invention, the bead seats 1 have an oppositely taper relationship of extending toward the bead seat radius 3 at a downwardly inclined gradient and are rotating surfaces of an outwardly concave curve having a radius of curvature of 20-1000 mm. On the other hand, the bead seat 1' of the conventional rim extends from the bead seat radius 3' toward the well 5 at a downwardly inclined gradient with respect to a bead base line of the bead portion (which is called as same directional taper) in connection with the tapering of the bead portion 6 from the heel 7 toward the toe 8. In the bead portion 6 of the tire, two-stage taper changing an inclination angle at a middle between the heel 7 and the toe 8 may frequently formed to give a larger interference to the heel 8 as compared with the toe 7.

In the rim-assembling of the pneumatic rubber tire, a part of one of the bead portions 6 is first dropped into the well 5 over the flange 2 (or 2') of the rim and thereafter the remaining part is forcedly entered inside the flange 2 (or 2') and then this bead portion 6 is moved toward the bead seat 1 (or 1') of the rim. Next, the remaining bead portion 6 is fitted to the bead seat 1 (or 1') in substantially the same manner as described above. Then, a given internal air pressure is applied through a valve arranged in the rim according to usual manner (not shown). According to the invention, as soon as the heel 7 of the bead portion 6 rides over the maximum diameter portion of the bead seat 1, the bead portion 6 fits onto the bead seat 1 at once. In this case, the use of a lubricant is more preferable.

In the conventional rim, the bead portion 6 of the tire as a whole is exclusively forced toward the flange 2' by the internal air pressure over the resistance based on the interference of the bead portion to the bead seat 1' of the rim, so that when the imbalance of the above resistance is caused somewhere over the periphery of the bead portion 6, the sure taper fitting can not be attained and a local gap between the heel 7 of the bead portion 6 and the bead seat radius 3' of the rim is created to cause insufficient fitness to the heel 7, which results in the occurrence of radial run-out of the tire.

On the contrary, according to the invention, the bead seats 1 of the rim have an opposite taper relationship, so that after the heel 7 of the bead portion 6 rides over the maximum diameter portion of the bead seat, the heel 7 is pushed toward the bead seat radius 3 in a slipping-down direction and uniformly seated to the bead seat radius 3 over the full periphery of the bead portion 6. Furthermore, the toe 8 of the bead portion 6 is fitted to the large diameter side of the bead seat 1, so that the interference of the bead portion is more increased.

When the bead seat radius 3 includes a cylindrical surface portion (not shown) of a short length adjoining to a downwardly extended end of the bead seat 1, such a surface portion substantially locates at a position corresponding to the bead core 9 of the tire assembled onto the rim, so that it serves to ensure the mounting posture of the bead portion 6. On the other hand, when the flange has an escape surface inclined outward with respect to a plane inclusive of a point defining a specified rim width on the bead base line perpendicular to a center axis of the wheel, the expansion of the tire through the internal air pressure is not restricted to a certain extent and the stable seating of the heel 7 of the bead portion 6 is promoted.

In the invention, an inclination angle of the bead seat 1 with respect to a bead base line of the bead portion is preferably within a range of 4-14°. When the inclination angle is less than 4° or more than 14°, the fitness to the bead portion is not effectively improved.

The bead seat may be a rotating surface of an outwardly concave curve having a radius of curvature of 20-1000 mm. When the radius of curvature is less than 20 mm, the fitness to the bead portion is not improved, while when it exceeds 1000 mm, the rotating surface approaches only to a straight line.

The escape surface of the flange 2 serves to improve the adaptability to the heel 7 of the bead portion, so that an inclination angle of the escape surface with respect to the above plane is preferably not more than 10°. When the inclination angle exceeds 10°, a gap is created between the outer surface of the bead portion 6 and the inner surface of the flange 2 to easily cause the inclusion of foreign matter therein.

Moreover, it is practical that a minimum diameter of the rim at the bead seat radius 3 is smaller by 2.6 mm than a specified rim diameter with a tolerance of ±0.98 mm and a maximum diameter of the bead seat 1 is larger by 0.4 mm than the specified rim diameter with tolerances of +0.6 mm and -0.2 mm.

The following examples are given in illustration of the invention and are not intended as limitations thereof.

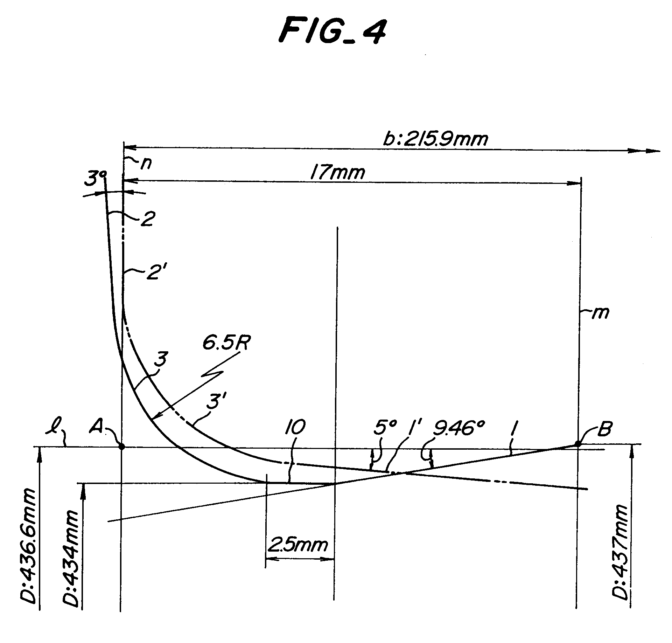

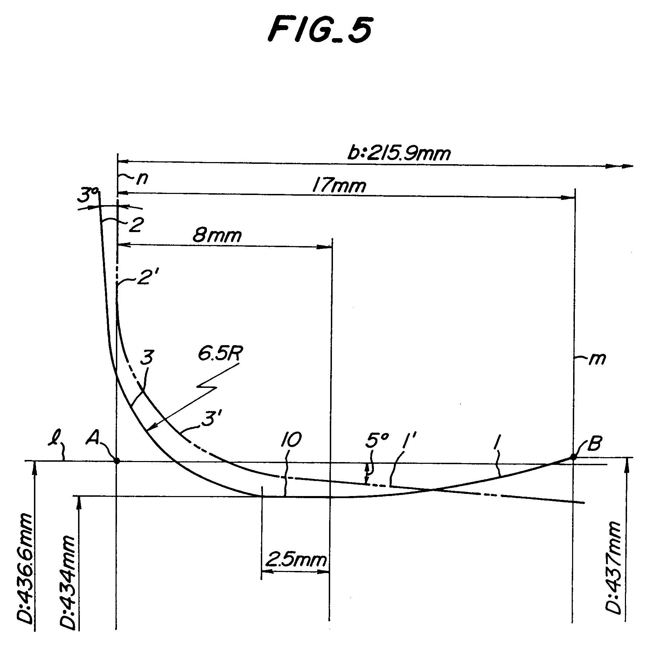

In Fig. 4 is schematically shown a rim contour including a bead seat 1, a part of a flange 2 and a bead seat radius 3 according to the invention as Example 1, and in Fig. 5 is schematically shown a rim contour according to the invention as Example 2 in which the bead seat 1 is a rotating surface of an outward concave curve having a radius of curvature of 120 mm. These examples show a main part of a rim having a rim contour of 8.5J x 17 used in a pneumatic rubber tire having a tire size of 235/45 R17.

In Figs. 4 and 5, a point A on a bead base line $\ell$ (rim diameter line: rim diameter D in this example is 6 mm ± 0.38 mm) determines a rim width b (215.9 mm in this example). The rim of Example 1 has a shape that the bead seat 1 extends toward the bead seat radius 3 at a downward inclination angle of 9.46° from a point B intersecting a circumference of 437 mm in diameter with a line m separated at 17 mm from a normal line n passing through the point A and connects to the bead seat radius having a radius of curvature of 6.5 mm through a cylindrical surface portion 10 of a short length (2.5 mm) having a diameter equal to a minimum diameter of the rim at the bead seat radius 3 of 434 mm, while the bead seat radius 3 connects to the flange 2 having an escape surface inclined outward at an angle of 3° with respect to the normal line n in the point A. The rim of Example 2 has the same structure as in Example 1 except that the bead seat 1 is a rotating surface of a concave curve having a radius of 120 mm.

The conventional rim contour is shown by a phantom line in Figs. 4 and 5 for the comparison.

A radial run-out (mm) of the tire assembled on the rim shown in Fig. 4 or 5 is measured to obtain results as shown in Table 1.

<div align="center">

Table 1

| Run No. | Conventional Example (mm) | Example 1 (Fig. 4) (mm) | Example 2 (Fig. 5) (mm) |
|---------|---------------------------|-------------------------|-------------------------|
| 1 | 1.33 | 0.8 | 0.8 |
| 2 | 1.8 | 0.7 | 0.8 |
| 3 | 1.9 | 0.6 | 0.9 |
| 4 | 2.2 | 0.9 | 0.6 |
| 5 | 2.0 | 0.9 | 1.0 |
| $\bar{x}$ | 1.84 (100) | 0.78 (235) | 0.82 (220) |
| R | 0.9 (100) | 0.3 (300) | 0.4 (225) |

</div>

Note: Values in parentheses are index values, in which the larger the value, the better the result.

$\bar{x}$ : average value

R : scattering

The rim used in this test is made by machining of aluminum plate.

As seen from Table 1, according to the invention, the radial run-out is reduced by half and the scattering thereof is reduced to approximately 1/3.

Then, R.F.V. (Radial Force Variation) and L.F.V. (Lateral Force Variation) are measured by means of a uniformity machine (3.3 inch) to obtain results as shown in Table 2 together with results of test for resistance of bead leaving, test for rim slipping, test for indoor steering property and feeling test in actual running.

Table 2

| | | Example 1 (Fig. 4) | Example 2 (Fig. 5) | Conventional Example |
|---|---|---|---|---|
| Uniformity R.F.V. | | 150 | 140 | 100 |
| L.F.V. | | 135 | 130 | 100 |
| Test for resistance to bead leaving | | 125 | 125 | 100 |
| Test for rim slipping | | 120 | 120 | 100 |
| Indoor steering property $CF_{max}$ | | 130 | 125 | 100 |
| CP | | 120 | 120 | 100 |
| Actual running | feeling evaluation | 170 | 160 | 100 |
| | gripping property during cornering | both properties are good | both properties are good | - |
| | conrnering stability | | | |

Note)

· Test conditions for uniformity: measured at an internal pressure of 2.5 kgf/cm$^2$ under a load of 553 kg (85% of normal load).

· Test for resistance to bead leaving: The leaving force is measured at internal pressures of 0.6, 0.7, 0.8 and 1.0 kgf/cm$^2$ under a load of 650 kg. It is evaluated by an index on the basis that the case at the internal pressure of 2.5 kgf/cm$^2$ is 100.

· Test for rim slipping: It is evaluated by a shifting amount between the rim before the test and the standard line of the tire when driving force is repeatedly applied to the tire-wheel assembly at an internal pressure of 2.5 kgf/cm$^2$ under a load of 553 kg.

· Indoor drum test for steering property: Maximum cornering force (CFmax) and cornering power (CP) are measured under conditions that an internal pressure is

2.5 kgf/cm², a load is 650 kg, a drum speed is 40 km/hr and a slip angle is 0-16°.

· Feeling test in actual running: The running performance is evaluated by feeling of a test driver when the test tire-wheel assembly is mounted onto a test vehicle and run on dry road.

As mentioned above, the bead seat pair in the rim contour according to the invention has an opposite taper relationship, which is entirely different from the bead seat pair in the conventional rim contour, so that when the pneumatic rubber tire is mounted onto the wheel according to the invention, the heel of the bead portion of the tire rides over the maximum diameter portion of the bead base and is forcedly pushed toward the bead seat radius at a rather slackened state to exactly place the bead portion into a given position of the rim and hence the longitudinal vibration of the tire-wheel assembly after the rim assembling is considerably reduced. On the other hand, the toe of the bead portion is fitted to the vicinity of the maximum diameter portion of the bead seat, so that the interference of the bead portion is increased to improve the sir tightness.

Thus, in the wheel for the tire according to the invention, the radial run-out is extremely less and R.F.V. is advantageously mitigated to solve not only vibration problem of the vehicle but also various requirements.

## Claims

1. A wheel for a pneumatic rubber tire, comprising a pair of bead seats (1) and flanges (2) for receiving a pair of bead portions (6) of a tire upon fitting, and a bead seat radius (3) connecting the bead seat (1) to the flange (2) and having a sectionally concave arc corresponding to a radially sectional contour of a bead heel (7) in the bead portion (6) of the tire, in which said pair of bead seats (1) have an oppositely taper relationship extending toward said bead seat radius (3) at a downwardly inclined gradient, whereby a stable seating state of the bead heel is induced and held and also an interference of a toe (8) in said bead portion (6) is increased.

2. A wheel as claimed in claim 1, characterized in that said bead seat radius (3) includes a cylindrical surface portion of a short length adjoining to a downwardly extended end of said bead seat (1).

3. A wheel as claimed in claim 1 or 2, characterized in that the inclination angle of said bead seat (1) with respect to a bead base line of said bead portion (6) is within a range of 4-14°.

4. A wheel as claimed in any of claims 1 to 3, characterized in that said bead seat (1) is a rotating surface of an outwardly concave curve having a radius of curvature of 20-1000 mm.

5. A wheel as claimed in any of claims 1 to 4, characterized in that said flange (2) has an escape surface inclined outward with respect to a plane inclusive of a point defining a specified rim width on a bead base line perpendicular to a center axis of the wheel.

6. A wheel as claimed in claim 5, characterized in that the inclination angle of said escape surface with respect to the said plane is not more than 10°.

7. A wheel as claimed in any of claims 1 to 6, characterized in that a minimum diameter of the rim at said bead seat radius (3) is D-2.6 mm (tolerance: ±0.98 mm) with respect to a specified rim diameter D, and a maximum diameter of said bead seat is D+0.4 mm (tolerance: +0.6 mm, -0.2 mm).

# FIG_1

# FIG_2

## PRIOR ART

# FIG_3

## FIG_4

# FIG.5

European Patent Office

**EUROPEAN SEARCH REPORT**

Application Number

EP 93 30 3765

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | DE-C-858 514 (CONTINENTAL GUMMI-WERKE) <br> * the whole document * <br> --- | 1,2,3 | B60B1/00 <br> B60B21/10 |
| A | DE-A-3 321 981 (UNIROYAL ENGLEBERT REIFEN) <br> * page 8; figure 6 * <br> --- | 1,2,5 | |
| A | US-A-4 606 390 (ANTHONY SHUTE) <br> * column 2, line 25 - column 4, line 24; figures * <br> ----- | 1 | |

|  |  |  | TECHNICAL FIELDS SEARCHED (Int. Cl.5) |
|---|---|---|---|
|  |  |  | B60B |

The present search report has been drawn up for all claims

| Place of search | Date of completion of the search | Examiner |
|---|---|---|
| THE HAGUE | 17 SEPTEMBER 1993 | VANNESTE M.A.R. |